# EUROPÄISCHE PATENTANMELDUNG

(11) **EP 2 325 145 A1**
(43) Veröffentlichungstag der Anmeldung: **25.05.2011**
(21) Anmeldenummer: 10014481.5
(22) Anmeldetag: 11.11.2010
(51) Int. Cl.: C02F 11/14, C02F 11/18, C02F 3/00

(54) **Verfahren und Vorrichtung zur Dehydratation von teilentwässertem Schlamm mit organischen Anteilen und zur Bereitstellung eines energiereichen Brennstoffs**

(30) Priorität: 11.11.2009 DE 102009052851
(71) Anmelder: Ihmig, Alexandra, 83026 Rosenheim (DE)
(72) Erfinder: Ihmig, Alexandra, 83026 Rosenheim (DE); Richter, Werner, 87600 Kaufbeuren (DE)

(57) **Zusammenfassung**

Es wird ein Verfahren beschrieben, bei welchem teilentwässerter Schlamm mit organischen Anteilen energiearm entwässert und zugleich ein Brennstoff mit hohem Heizwert hergestellt wird.

## Beschreibung

### Beschreibung

### Stand der Technik

Es ist allgemein üblich und bekannt, Klärschlamm nach der anaeroben Behandlung in einem Faulturm in Pressen oder Zentrifugen oder ähnlichem mechanisch zu entwässern; diese Behandlungsweise hat den Vorteil, dass ein gewisser Teil der organischen Anteile in Faulgas umgewandelt und danach energetisch genutzt werden kann; ein weiterer Vorteil dieses Verfahren ist, dass der übrig bleibende Restschlamm soweit biologisch abgebaut ist, dass keine nennenswerte Geruchsbelästigung durch freien Schwefelwasserstoff mehr auftritt.

Dieser entwässerte Restschlamm enthält aber immer noch einen erheblichen Anteil an organischen Stoffen welche von der begrenzten Verweildauer im Faulturm und von der mangelnden Desintegration, der im Schlamm enthaltenen biologischen Zellen herrühren.

Bis die Problematik der Schwermetallbelastung diskutiert wurde, wurde dieser Restschlamm in der Vergangenheit vor allem in der Landwirtschaft entsorgt.

Nachdem dieser Entsorgungsweg nun aber nahezu zum Erliegen gekommen ist, versucht man nun diesen organischen Anteil anderweitig zu verwerten.

Hier ist vor allem die energetische Nutzung zu nennen; sei es nun die Vergasung, die verflüssigung oder die Verbrennung. Allen diesen Verfahren ist gemeinsam, dass sie einen enormen energetischen Aufwand voraussetzen, welcher bei der anschließenden Verwertung nicht wieder kompensiert werden kann.

Bei der Verbrennung im Speziellen ist das Restwasser zuvor bis auf ca. 4 Gewichtsprozent zu eliminieren; hier gilt es das interzelluläre und das intrazelluläre Wasser auszutreiben; es kommen hier die verschiedensten Trocknungsverfahren mit entsprechendem Energieeinsatz zum Tragen. All diesen Trocknungsverfahren ist gemeinsam, dass große Mengen an wasserdampfhaltiger Luft mit entsprechend geruchsintensiven Fraktionen des Klärschlamms aufwendig gefiltert werden müssen, bevor sie ins Freie entlassen werden können. Oder bei Platten- bzw. Trommeltrockner neigen die Kontaktstellen mit.dem Restschlamm zu verkleben.

Das hierbei entstehende Trockenpulver hat aber lediglich einen Heizwert, welcher nicht für eine eigenständige Verbrennung ausreichend ist. Dieses Pulver kann lediglich unter Zufuhr entsprechend energiereicher Zusatzstoffe wie Mineralöl, Pflanzenöl, Kohle oder Koks oder der Kunststofffraktion aus dem Müll verbrannt werden.

### Vorteile der Erfindung

Die Aufgabe der Erfindung ist es ein Verfahren zu beschreiben, bei welchem das Austreiben des Restwassers energetisch erheblich günstiger bewerkstelligt werden kann und bei welchem gleichzeitig ein Brennstoff bereitgestellt wird, der einen erheblich höheren Heizwert hat als diese Trockenpulver.

Es wird vorgeschlagen den teilentwässerten Restschlamm zunächst mechanisch zu vergleichmäßigen, so dass in etwa gleich große Teile entstehen; diese Vergleichmäßigung ist deshalb erforderlich, da bei der anschließenden Zufuhr dieser wässrig-feuchten Pellets zu einem heißen Öl dann erst die Voraussetzungen gebildet werden, diese gleichmäßig mit Wärme zu durchdringen; diese Pelletierung kann mit einer Art Fleischwolf bewerkstelligt werden.

Die Temperatur des Öles muss dabei deutlich über der jeweiligen Siedetemperatur von Wasser. Durch diesen Frittiervorgang wird das in den Pellets enthaltene Wasser verdampft und durch freie Konvektion ausgetrieben. Es wird dabei sowohl das interzelluläre wie auch das intrazelluläre Wasser freigesetzt, da durch eine angemessen lange Verweildauer im heißen Öl die thermische Belastbarkeit der Zellwände überschritten wird, diese platzen und somit die Zellen ihr Wasser freigeben, welches dann in der bekannten Weise aus dem Gemenge ausgetrieben wird.

Das Ziel ist bei diesem Vorgang jedoch ein anderes als bei der Lebensmittelfrittierung: bei letzterer wird versucht durch eine möglichst hohe Frittiertemperatur des Öls beim Einbringen des Frittierguts die kapillaren Poren möglichst schnell zu schließen um somit ein Eindringen des Öls in das Produkt weitgehend zu unterbinden und dadurch möglichst viel Armoma und Restwasser beim Garprozess im Produkt zu belassen. Im Gegensatz hierzu wird bei dieser Erfindung jedoch angestrebt, möglichst wenig Restwasser im Edukt zu belassen und stattdessen einen hohen Ölgehalt zu erreichen. Entsprechend muss die Temperaturführung angepasst werden. Für das Erreichen des Ergebnisses können sowohl Öle bzw. Fette auf Mineralbasis oder aber ebenso aus pflanzlicher, nachwachsender Herkunft eingesetzt werden.

Es ist hierbei völlig unerheblich, ob die Zufuhr der wässrig-feuchten Pellets zum Ölbad kontinuierlich oder diskontinuierlich erfolgt.

Da die spezifische Wärmekapazität von Öl nur ca. 25 % der von Wasser beträgt, lässt sich dieser Vorgang energetisch erheblich günstiger gestalten als bei den bekannten Trocknungsverfahren. Natürlich ist die Verdampfungsenthalpie von Wasser hierbei durch das Öl als Trägermedium genauso aufzubringen wie bei jedem anderen Trocknungsverfahren, nur die Verluste sind bei diesem erfindungsgemäßen Verfahren erheblich geringer als bei anderen Trocknungsarten.

Bei dem vorgeschlagenen Verfahren müssen zudem lediglich dieser Wasserdampf, sowie eine geringe Menge hierin enthaltener Schadstoffe entsorgt werden.

Durch die Zufuhr der Pellets zum heißen Öl wird natürlich nicht nur Wasser ausgetrieben, sondern auch dieses Öl in diese Struktur eingelagert und gebunden, was bei diesem Verfahren erwünscht ist und den Heizwert oder Brennwert dieses Edukts ganz erheblich steigert. Das Edukt besteht dann aus ölgedrängten Pellets.

Da dieses Edukt bei dem beschriebenen Verfahren als ganzes über den jeweiligen Siedepunkt von Wasser erhitzt wird, kommt es zu einer Abtötung von pathogenen und anderen Keimen sowie Viren wodurch eine Desinfektion des Restschlammes erreicht wird.

In diesem beschriebenen Verfahren wird die pelletartige Grundform des Restschlammes beibehalten, obwohl es zu einer Gewichts- und Volumenreduktion kommt; die Gewichtsverminderung kommt allein schon deshalb zu Stande, da heißes Öl nur zu ca. 25% der Trockenmasse eingelagert wird, wohingegen das ausgetriebene Wasser ca. 40% ausmacht. Zudem ist das spezifische Gewicht von Öl erheblich niedriger als das von Wasser.

Die Volumenreduktion wird durch denselben Effekt wie die Gewichtsreduktion bewerkstelligt, nämlich dass erheblich weniger Öl eingelagert wird als zuvor Wasser ausgetrieben wurde.

Diese frittierten Restschlammpellets neigen weder zum verklumpen noch treten explosive Probleme wie mit Staubpulvern auf, deren Vermeidung einen erheblichen maschinentechnischen Aufwand in den nachfolgenden Prozessschritten bedeuten.

Es versteht sich nahe zu von selbst, dass das beschriebene Verfahren auch für andere Arten von Schlämmen mit organischen Anteilen einsetzbar ist; hier ist besonders an die thermische Verwertung des teilentwässerten Restschlammes aus Biogasanlagen zu denken.

Ein weiterer wesentlicher Vorteil des beschriebenen Verfahrens ist, dass die vorhandenen Prozessketten nicht geändert werden müssen.

### Zeichnung

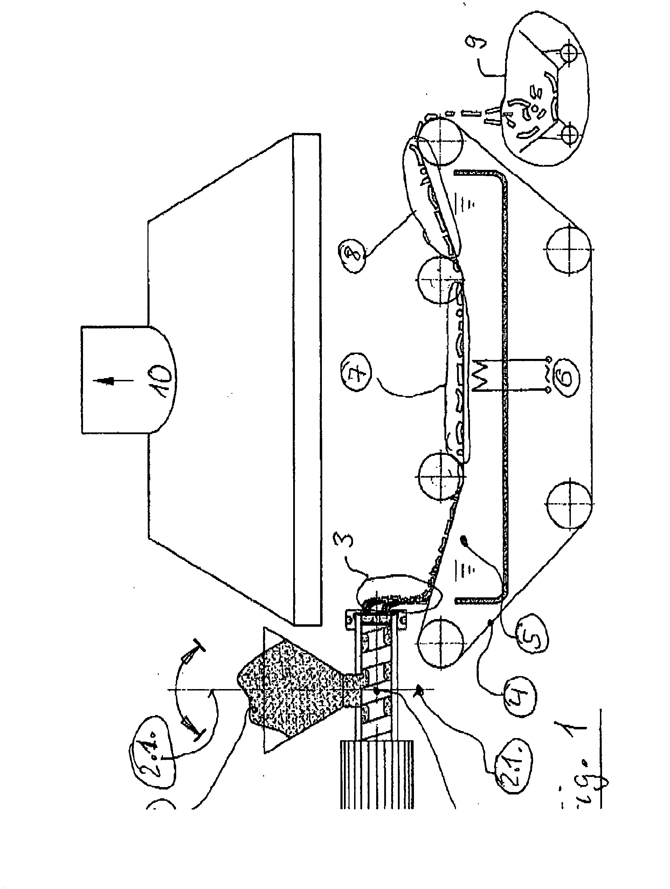

Zur weiteren Erläuterung der Erfindung wird auf die Zeichnung Fig.1 Bezug genommen. Fig.1 stellt die Seitenansicht der Vorrichtung dar; die einzelnen Verfahrensschritte werden wie folgt beschrieben:
1. Aufgabeeinrichtung für teilentwässerter Klärschlamm
2. Vergleichmäßigungseinheit
2.1. Schwenkachse der Vergleichmäßigungs-Einheit
3. wässrig-feuchte Pellets
4. Förderkette
5. heißes Ölbad
6. Heizung dieses Ölbads
7. Pellets während des Frittiervorgangs
8. Pellets während des Abtropfens und Abkühlens
9. Abtransport des schüttfähigen Brennstoffs
10. Abzug des wasserdampfes mit Aerosol

### Beschreibung an Hand eines Ausführungsbeispiels

Die Lösung der Entsorgungsproblematik von teilentwässertem Schlamm mit organischen Anteilen unter geringem Energieeinsatz sowie die Bereitstellung eines energiereichen Brennstoffes sind die Hauptanliegen der Erfindung.

Dabei wird der teilentwässerte Schlamm (1) in einer Aufgabeeinrichtung einer Vergleichmäßigungeinheit (2) zugeführt, in welcher gleichmäßige wässrig-feuchte Pellets (3) hergestellt werden. Dabei ist diese Einheit (2) um die Achse (2.1) schwenkbar, um einen Auftrag dieses Gemenges (3) über die ganze Tiefe auf dem endlos umlaufenden Zugmittel-Transport-Band (4) zu ermöglichen. Diese Zugmittel-Transport-Band (4) ist vorzugsweise als Kette ausgebildet.

Gemeinsam wird dieses Gemenge (3) mit dem Zugmittel-Transport-Band (4) anschließend einem heißem Ölbad (5) zugeführt. Dieses Ölbad (5)wird durch eine Heizung (6) erwärmt. Die Pellets werden nachdem des Frittiervorgangs (7) in der Abtropf- und Abkühleinheit (8) soweit von überschüssigem Öl befreit und soweit abgekühlt, dass sie nicht mehr verklumpen und als schüttfähige Pellets (9) mit hohem Heizwert abtransportiert werden können.

In der Fig.1 ist noch ein Dunstabzug (10) dargestellt, welcher dazu dient, den entstehenden Wasserdampf samt einer geringen Menge an Schadstoffen gezielt entsorgen zu können.

## Patentansprüche

1. Verfahren und Vorrichtung zur Dehydratation von teilentwässertem Schlamm mit organischen Anteilen und zur Bereitstellung eines energiereichen Brennstoffs **dadurch gekennzeichnet, dass** dieser teilentwässerte Schlamm einem Kohlenwasserstoff/-gemisch in Form von wässrig-feuchten Pellets oder in anderer Form zugeführt wird.

2. Verfahren und Vorrichtung nach Anspruch 1 **dadurch gekennzeichnet, dass** der/das Kohlenwasserstoff/-gemisch in der flüssigen Phase vorliegt.

3. Verfahren und Vorrichtung nach den Ansprüchen 1 und 2 **dadurch gekennzeichnet, dass** der/das Kohlenwasserstoff/-gemisch auf eine Temperatur oberhalb des jeweiligen Siedepunkts von Wasser gebracht wird.

4. Verfahren und Vorrichtung nach den Ansprüchen 1 bis 3 **dadurch gekennzeichnet, dass** dieser/dieses Kohlenwasserstoff/-gemisch bei dieser Temperatur nur geringem Umfang in gasförmigem Aggregatzustand vorliegt.

5. Verfahren und Vorrichtung Ansprüchen 1 bis 4 **dadurch gekennzeichnet, dass** durch bei Zufuhr dieses Gemenges das Wasser hierin verdampft und dadurch ausgetrieben wird.

6. Verfahren und Vorrichtung nach den Ansprüchen 1 bis 5 **dadurch gekennzeichnet, dass** bei dieser Art des Austreibens von Wasser lediglich dieser wasserdampf und eine geringe Menge hierin enthaltener Schadstoffe entsorgt werden müssen.

7. Verfahren und Vorrichtung nach den Ansprüchen 1 bis 6 **dadurch gekennzeichnet, dass** bei dieser Art des Austreibens von Wasser eine Gewichts- und Volumen-Reduktion des Schlammes erreicht wird.

8. Verfahren und Vorrichtung nach den Ansprüchen 1 bis 7 **dadurch gekennzeichnet, dass** durch die Zufuhr dieses Gemenges anstelle von Wasser dieser/dieses Kohlenwasserstoff/-gemisch in die Struktur des Schlammes eingelagert wird.

9. Verfahren und Vorrichtung nach den Ansprüchen 1 bis 8 **dadurch gekennzeichnet, dass** sich durch diese Einlagerung der Heizwert/Brennwert des Schlammes deutlich erhöht.

10. Verfahren und Vorrichtung nach den Ansprüchen 1 bis 9 **dadurch gekennzeichnet, dass** durch die Temperaturerhöhung des gesamten Edukts über den jeweiligen Siedepunkt von Wasser eine Desinfektion desselbigen erreicht wird.

11. Verfahren und Vorrichtung nach den Ansprüchen 1 bis 10 **dadurch gekennzeichnet, dass** dieses Edukt seine pelletartige oder andere Grundforn beibehält und dadurch schüttfähig wird.

12. Verfahren und Vorrichtung nach den Ansprüchen 1 bis 11 **dadurch gekennzeichnet, dass** dieses Edukt weder eine Neigung zum Verklumpen noch zur explosiven Staubbildung aufweist.
